# EUROPEAN PATENT APPLICATION

(11) **EP 3 896 807 A1**
(43) Date of publication of application: **20.10.2021**
(21) Application number: 21168033.5
(22) Date of filing: 13.04.2021
(51) Int. Cl.: H02B 13/025, H02B 13/00, H02B 1/20, H02B 1/06

(54) **SWITCHGEAR WITH AN IMPROVED ARC BARRIER**

(30) Priority: 15.04.2020 GB 202005458
(71) Applicant: Eaton Intelligent Power Limited, Dublin 4 (IE)
(72) Inventor: GATTRINGER, Thomas, 3943 Schrems (AT); Muellner, David, 3950 Gmünd (AT)
(74) Representative: Eaton IP Group EMEA

(57) **Abstract**

An electrical switchgear (1) is disclosed, which comprises a switchgear housing (3) providing protection against a surrounding environment (A) against objects having a diameter ≥ 12.5 mm and in particular of at least code IP2X of IEC standard 60529 and which comprises a number of busbars (4) within the switchgear housing (3), wherein at least two of them are interconnected by means of a joint (6a, 6b). According to the proposed measures, the joint (6a, 6b) is surrounded by a joint enclosure (7a..7c) within said switchgear housing (3) providing protection against objects having a diameter ≥ 2.5 mm and in particular of at least code IP3XD of IEC standard 60529.

## Description

### TECHNICAL FIELD

The invention relates to an electrical switchgear, which comprises a switchgear housing providing protection against a surrounding environment against objects having a diameter ≥ 12.5 mm and which comprises a number of busbars within the switchgear housing, at least two of them being interconnected by means of a joint.

### BACKGROUND ART

Arcs burning between electrical conductors with a longitudinal extension have the tendency to move because of the electromagnetic forces acting on them. Particularly this counts for busbars in an electrical switchgear, where arcs can destroy large areas of an electrical appliance, even those areas where no electrical faults originated. So, to avoid straying of an arc within larger electrical appliances and to keep it in the section of its origin, it is known to install barriers. For example, these barriers (e.g. plastic barriers) can be installed between separate switchgear sections. Hence, the arc cannot move further to the next section and must stay at this point until an upstream circuit breaker/protection device trips. Although, straying of arcs can be avoided that way, those barriers have another unwanted effect.

Usually, the busbars of separate switchgear sections are interconnected by means of a joint (e.g. by a bolted joint or a clamped joint). Unfortunately, the movement of the arc often is hindered at the place where a joint is located what means that the effects of the arc are exceptional strong there. Because of the high currents, joints may be welded together what makes repairing the switchgear much more complicated. For example, screws used for a bolted joint or a clamped joint cannot be unfastened anymore.

This means that the whole affected section needs to be replaced. In case that interconnected sections of the main busbar are affected, it is nearly impossible or at least quite challenging to remove them without uninstall (unaffected) equipment in the switchgear to a large extent.

### DISCLOSURE OF INVENTION

Accordingly, a problem of the invention is to provide an improved electrical switchgear. In particular, welding of interconnected sections of busbars shall be avoided and repairing a switchgear after an arc event shall be eased.

The problem of the invention is solved by an electrical switchgear as defined in the opening paragraph, wherein the joint of the busbars is surrounded by a joint enclosure within said switchgear housing providing protection against objects having a diameter ≥ 2.5 mm.

In particular, the switchgear housing can provide protection against a surrounding environment of at least code IP2X of IEC standard 60529, and the joint enclosure can provide protection of at least code IP3XD of IEC standard 60529.

By the above measures, an arc is kept away from a busbar's joint, and the destructive effects of an arc cannot act on that joint. In that, the busbars cannot be welded together there, and repairing a switchgear after an arc event is eased. In particular, there is no need to uninstall equipment in the switchgear to a large extent to exchange busbars.

Because the length of the busbars inside of the joint enclosure compared to their length outside of the joint enclosure (but within the switchgear housing) is small, the risk that an arc is ignited within the joint enclosure is small. That is a first reason why an arc is likely to be kept outside of the joint enclosure.

Another reason, why it is very unlikely that an arc flash occurs within the joint enclosure is based on the protection (class) of the joint enclosure. Because the busbar joints are surrounded or enclosed by a joint enclosure providing protection against objects having a diameter ≥ 2.5 mm and in particular of at least code IP3XD of IEC standard 60529, conditions which favor ignition of an arc are reliably kept away from the busbar joint.

"IP3XD of IEC standard 60529" in particular means that the protection is effective against objects having a diameter ≥ 2.5 mm. Accordingly, IP3XD protects against nearly any animal. Just small insects may pass an IP3XD barrier, which are however not expected to cause an arc flash. In addition, this barrier is also effective against out blowing gas IP3XD exhausted by switching devices within the switchgear.

"Out blowing gas" is ionized air, which additionally may comprise metal vapor originating from the switching contacts of a switching device. Because of these characteristics, out blowing gas is highly conductive and may easily cause an arc flash between exposed conductors of different voltage.

In this context it should be noted that the electrical switchgear may comprise a switching device, which is arranged within the switchgear housing and which is electrically connected to the busbars. In particular, the switching device is a circuit breaker upstream or downstream to a potential flash over region of the busbars.

"Surrounded" in the context of the joint enclosure in particular means "completely surrounded". That means that the joint enclosure encloses the joint of the busbars on all sides facing inward to the switchgear housing (e.g. top side, bottom side, front side, back side).

In this context, one should note that the joints can be surrounded both by the joint enclosure and by a frame of the electrical switchgear. Accordingly, material can be saved because the frame provides a double function, and the joint enclosure is easy to install, in particular also in existing electrical switchgears. Nonetheless, the joints can be surrounded exclusively by the joint enclosure (i.e. without involving the frame for the protecting function) in an alternative embodiment. In that, the protecting function is particularly safe.

"IP2X of IEC standard 60529" in particular means that the protection is effective against objects having a diameter ≥ 12.5 mm. So, larger animals may pass this barrier and may get into the switchgear. Experience shows that even larger animals like mice, rats and so on can get into switchgears and cause an arc flash. However, it is nearly impossible that they pass the second (IP3XD) barrier formed by the busbar joint enclosure.

In summary, the risk for an arc flash is much higher outside of the busbar joint enclosure than inside. In other words, the cascade of (IP-)protections provide for a lower likehood of an arc flash within the busbar joint enclosure than outside. In turn, the busbar joint is not welded together and is kept working (i.e. may still be unfastened) even in case of an arc event within the switchgear under nearly all imaginable circumstances. This means that besides the fact that an arc cannot enter the joint enclosure, it is also (almost) impossible that an arc is ignited in this compartment.

In the above context it is very advantageous if the protection of the joint enclosure is better than the protection of the switchgear housing what in particular can mean that the IP code of the joint enclosure is higher than the IP code of the switchgear housing. In this way, the risk for an arc flash within the busbar joint enclosure is even further reduced. Note in this context that a protection against objects having a diameter ≥ 2.5 mm is already better than a protection against objects having a diameter ≥ 12.5 mm and that IP3XD is already higher than IP2X, but the electrical switchgear for example may also provide a protection against objects having a diameter ≥ 2.5 mm and in particular IP3X for the switchgear housing and a protection against objects having a diameter ≥ 1.0 mm and in particular IP4X for the busbar joint enclosure.

It should be noted that although the proposed measures are particularly advantageous for joints arranged at a border of concatenated switchgear frames (i.e. at the border of switchgear sections), they are advantageous in general for joints of busbars. That means, the invention also does apply to joints located more to the center of the switchgear and in particular also applies to T-joints, crossings and X-joints (and not just to longitudinal or linear joints).

Generally the joint can be particularly be embodied as a bolted joint or as a clamped joint. In the context of this invention, a "bolted joint" or "screwed joint" in particular is a joint, which comprises a thread cut into the busbars or into bar-like connecting parts. A "bolted joint" or "screwed joint" does not necessarily comprise a nut to fasten the parts of the busbar connection. In contrast, a "clamped joint" is a joint, which comprises a nut. The busbars or bar-like connecting parts do not necessarily comprise threads, but may have just through holes or even may have no hole at all.

Beneficially, the joint enclosure is designed to be removable in order to provide access to the busbar joint in case of maintenance and repair.

Beneficially, a section of the joint enclosure directly adjacent to the busbars is made of an electrically insulating material. In this way, an arc flash between the busbars is hindered in the region of the joint enclosure.

In a further beneficial embodiment, the entire joint enclosure is made of an electrically insulating material. In this way, also arc flashes to conductors outside of the joint enclosure are hindered as well. It should be noted that this embodiment does not exclude metal screws turned into the joint enclosure. These screws however should not have a conductive connection to the busbars or other parts under voltage.

It should also be noted that the joint enclosure generally can be made of an metal cage which additionally can be coated with an insulating material. In this case, the mesh size should be < 2.5 mm to particularly provide at least code IP3XD.

Finally, it is advantageous if the electrical switchgear comprises a busbar holder arranged within the joint enclosure. By means of this busbar holder, the busbars are held in position to each other. Generally, the busbar holder can be a separate part or an integral part of the joint enclosure.

### BRIEF DESCRIPTION OF DRAWINGS

The invention now is described in more detail hereinafter with reference to particular embodiments, which the invention however is not limited to.
- Fig. 1: shows an exemplary electrical switchgear in oblique view;
- Fig. 2: shows an example for a joint enclosure in exploded view;
- Fig. 3: shows the joint enclosure of Fig. 4 in mounted state;
- Fig. 4: shows a schematic rear view of the switchgear with an arc having been ignited;
- Fig. 5: shows the switchgear of Fig. 4 in a state in which the arc has moved to a joint enclosure and stays there and
- Fig. 6: shows a detailed view of a busbar joint.

### DETAILED DESCRIPTION

Generally, same parts or similar parts are denoted with the same/similar names and reference signs. The features disclosed in the description apply to parts with the same/similar names respectively reference signs. Indicating the orientation and relative position (up, down, sideward, etc) is related to the associated figure, and indication of the orientation and/or relative position has to be amended in different figures accordingly as the case may be.

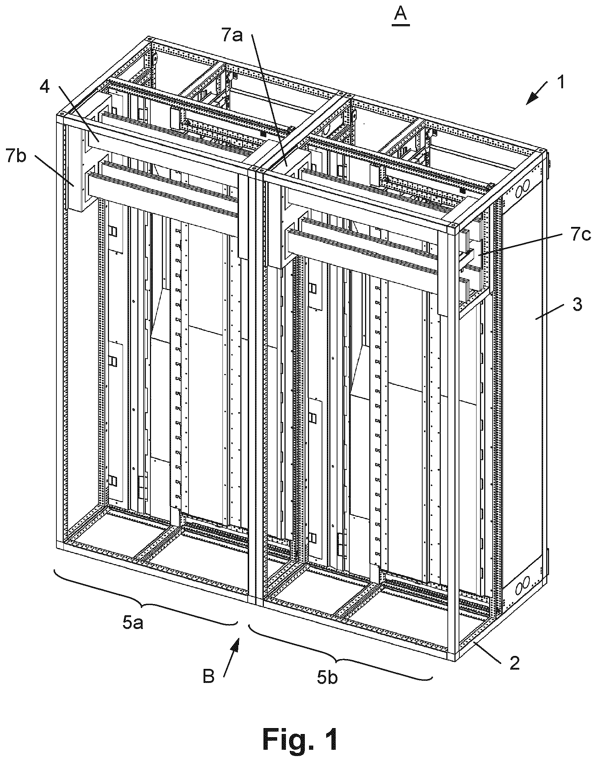

Fig. 1 shows an electrical switchgear 1, which comprises a switchgear frame 2, a switchgear housing 3 mounted to the switchgear frame 2 and a number of busbars 4 within the switchgear housing 3. The switchgear housing 3 provides protection against a surrounding environment A against objects having a diameter ≥ 12.5 mm and in particular of at least code IP2X of IEC standard 60529 (note that the housing 3 is shown just in parts in Fig. 1, and in reality the housing 3 is a closed shell).

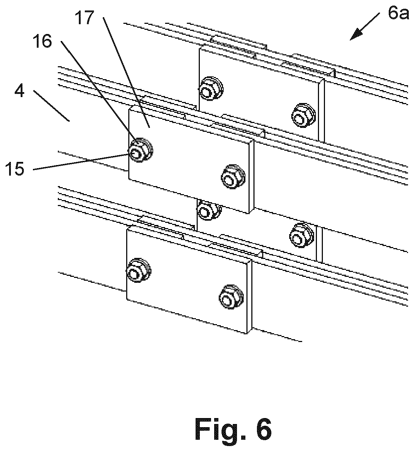

In this example, the switchgear 1 comprises two switchgear sections 5a, 5b, each having its own switchgear frame 2 and its own busbars 4. At a border B of the concatenated switchgear frames 2, the busbars 4 are interconnected by means of a joint 6a, which is depicted in more detail in Fig. 6.

The joint 6a is surrounded by a joint enclosure 7a within said switchgear housing 3 (that is why the joint 6a itself is not visible in Fig. 1). In addition, there are additional joint enclosures 7b, 7c at the outer border of the switchgear 1. In this way, further switchgear sections 5a, 5b can easily be added to the switchgear 1 and can be connected thereto, right like the switchgear sections 5a, 5b are interconnected.

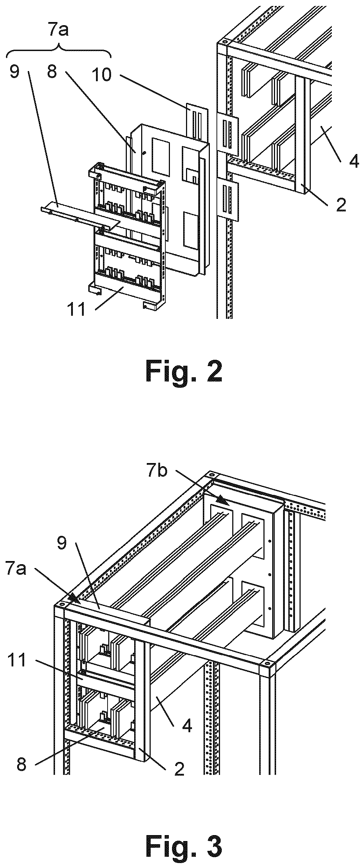

Figs. 2 and 3 show one half of the joint enclosure 7a in more detail, Fig. 2 in exploded view and Fig. 3 in a mounted state. In this example, the joint enclosure 7a comprises a main body 8, a top plate 9 as well as four busbar plates 10. Within the joint enclosure 7a there is arranged an optional busbar holder 11 in this example, by which the busbars 4 are held in position to each other.

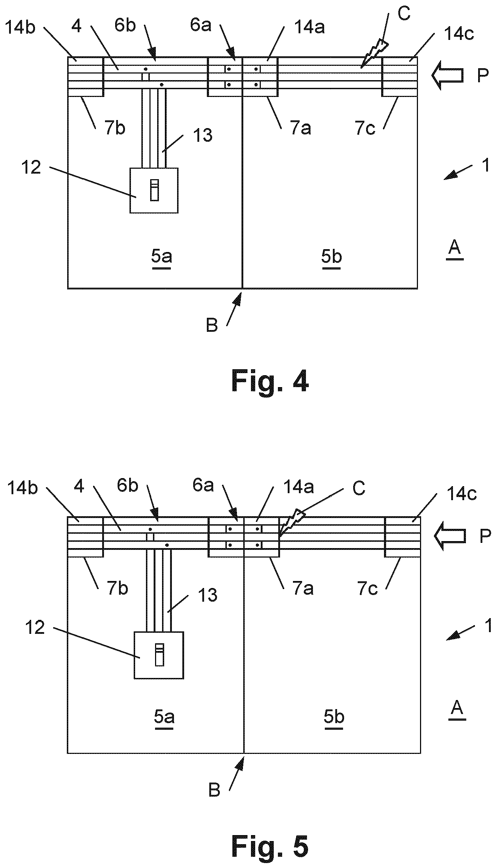

Figs. 4 and 5 show a schematic back view of the switchgear 1 in two different states, which are explained later in more detail. In this example, the switchgear 1 (here the switchgear section 5a) comprises an optional switching device 12, which is arranged within the switchgear housing 3 and which is electrically connected to the busbars 4 by means of vertical busbar sections 13. The vertical busbar sections 13 are connected to the busbars 4 by means of a further joint 6b. The switching device 12 of this example is arranged downstream to a potential flash over region on the busbars 4. Nevertheless, it could also be arranged upstream to such a region.

Figs. 4 and 5 also show that joint compartments 14a..14c are formed by the joint enclosures 7a..7c. In detail a joint compartment 14a is formed by the joint enclosure 7a, a joint compartment 14b is formed by the joint enclosure 7b and a joint compartment 14c is formed by the joint enclosure 7c.

Moreover, an arc C and a symbolic power source P connected to the busbars 4 is depicted in Figs. 4 and 5.

Fig. 6 finally shows the joint 6a in more detail. The busbars 4 are connected by means of screws 15 and nuts 16 as well as by help of optional connecting plates 17.

The function of the switchgear 1 disclosed in Figs. 1 to 6 now is as follows:
The joint enclosure 7a within said switchgear housing 3, which surrounds the joint 6a of the busbars 4, provides protection against objects having a diameter ≥ 2.5 mm and in particular of at least code IP3XD of IEC standard 60529. Accordingly, a protected compartment 14a is formed or enclosed by the joint enclosure 7a, which houses the busbar joint 6a. In this example, the main body 8 and the top plate 9 of the joint enclosure 7a are made of metal, whereas the four busbar plates 10, which form a section of the joint enclosure 7a directly adjacent to the busbars 4, are made of an electrically insulating material. However, this is no necessary condition, and instead the entire joint enclosure 7a can be made of an electrically insulating material. It should be noted in this context that the joint enclosure 7a (in particular the main body 8 and the top plate 9) can be made of an metal cage which can be coated with an insulating material. In this case, the mesh size should be < 2.5 mm to particularly provide at least code IP3XD. Moreover, there may also be metal screws turned into the joint enclosure 7a to fix the same. Generally it is advantageous if the joint enclosure 7a is removable in order to provide access to the busbar joint 6a in case of maintenance and repair.

Fig. 4 shows a state, in which an arc C has been ignited between the busbars 4. Driven by electromagnetic forces, it moves to the left until it reaches the joint enclosure 7a. This state is shown in Fig. 5. Because of the joint enclosure 7a, the arc C cannot move any further, although it is still driven by the electromagnetic forces. In this way, the arc C is kept away from the busbar joint 6a, and the busbar joint 6a is not exposed to the destructive effects of the arc C. Hence, the busbars 4 cannot be welded together there, and repairing the switchgear 1 after an arc event is eased. In particular, there is no need to uninstall equipment (e.g. the switching device 12) in the switchgear 1 to a large extent to exchange the busbars 4, which are likely to be destroyed by the static arc C, which stays there until an upstream circuit breaker cuts off the power P.

In principle, an arc C could also be ignited within the joint enclosure 7a. However, there are a couple of reasons against such an ignition.

First, the length of the busbars 4 inside of the joint enclosure 7a compared to their length outside of the joint enclosure 7a is small. Thus, the risk that an arc C is ignited within the joint enclosure 7a is small.

Second, the protection class of the joint enclosure 7a is relatively high. So, it is unlikely that out blowing gas exhausted by the switching device 12 or animals of noteworthy size get into the protected compartment 14.

Third, animals generally have to pass two barriers. The first one is the switchgear housing 3 forming a barrier against objects having a diameter ≥ 12.5 mm and in particular according to at least IP2X of IEC standard 60529. The second one is the joint enclosure 7a forming a barrier against objects having a diameter ≥ 2.5 mm and in particular according to at least IP3XD of IEC standard 60529. It is unlikely that animals can pass the second barrier before they get a lethal electrical shock inside of the switchgear housing 3.

In the above context it is very advantageous, if the protection of the joint enclosure 7a is better than the protection of the switchgear housing 3 what in particular can mean that the IP code of the joint enclosure 7a is higher than the IP code of the switchgear housing 3. In this way, the risk for an arc C within the busbar joint enclosure 7a is reduced even further.

The proposed measures are particularly advantageous for joints 7a arranged at a border B of concatenated of switchgear sections 5a, 5b or concatenated switchgear frames 2. Nevertheless they also apply to busbar joints in general. For example, the joint 6b could be enclosed by a joint enclosure 7a..7c as well. Moreover one should note that the joint enclosure 7a can enclose a common protected compartment 14a or two adjacent (but separate) compartments.

Moreover one should note that although the busbar joint 6a is embodied as a clamped joint (fixed by the nut 16), can also be embodied as a bolted joint (for example with a thread cut into the busbars 4 or into the connecting plates 17.

In the example shown in the Figures, the joints 6a, 6b are surrounded by the joint enclosure 7a..7c as such as well as by the frame 2 of the electrical switchgear 1 (see Figs. 2 and 3 in particular). Accordingly, material can be saved because the frame 2 provides a double function, and the joint enclosure 7a..7c is easy to install, in particular also in existing electrical switchgears 1. Although these measures are advantageous, the joints 6a, 6b can be surrounded exclusively by the joint enclosure 7a..7c (i.e. without involving the frame 2 for the protecting function) in an alternative embodiment. In that, the protecting function is particularly safe.

It is noted that the invention is not limited to the embodiments disclosed hereinbefore, but combinations of the different variants are possible. In reality, the switchgear 1 may have more or less parts than shown in the figures. The switchgear 1 as well as parts thereof may also be shown in different scales and may be bigger or smaller than depicted. Finally, the description may comprise subject matter of further independent inventions.

It should also be noted that the term "comprising" does not exclude other elements and the use of articles "a" or "an" does not exclude a plurality. Also elements described in association with different embodiments may be combined. It should also be noted that reference signs in the claims should not be construed as limiting the scope of the claims.

### LIST OF REFERENCE NUMERALS

- 1: electrical switchgear
- 2: switchgear frame
- 3: switchgear housing
- 4: busbar
- 5a, 5b: switchgear section

- 6a, 6b: busbar joint
- 7a..7c: joint enclosure
- 8: main body
- 9: top plate
- 10: busbar plate

- 11: busbar holder
- 12: switching device
- 13: vertical busbar section
- 14a..14c: joint compartment
- 15: screw

- 16: nut
- 17: connecting plate

- A: surrounding environment
- B: border of concatenated switchgear sections/frames
- C: arc
- P: power source

## Claims

1. Electrical switchgear (1), comprising
- a switchgear housing (3) providing protection against a surrounding environment (A) against objects having a diameter ≥ 12.5 mm,
- a number of busbars (4) within the switchgear housing (3), at least two of them being interconnected by means of a joint (6a, 6b),
**characterized in that**
- the joint (6a, 6b) is surrounded by a joint enclosure (7a..7c) within said switchgear housing (3) providing protection against objects having a diameter ≥ 2.5 mm.

2. Electrical switchgear (1) according to claim 1, **characterized in that** the switchgear housing (3) provides protection against a surrounding environment (A) of at least code IP2X of IEC standard 60529 and the joint enclosure (7a..7c) provides protection of at least code IP3XD of IEC standard 60529.

3. Electrical switchgear (1) according to claim 1 or 2, **characterized in that** the joint (6a, 6b) is surrounded exclusively by the joint enclosure (7a..7c).

4. Electrical switchgear (1) according to claim 1 or 2, **characterized in that** the joint (6a, 6b) is surrounded by the joint enclosure (7a..7c) and a frame (2) of the electrical switchgear (1).

5. Electrical switchgear (1) according to any one of claims 1 to 4, **characterized in that** a section of the joint enclosure (7a..7c) directly adjacent to the busbars (4) is made of an electrically insulating material.

6. Electrical switchgear (1) according to any one of claims 1 to 4, **characterized in that** the entire joint enclosure (7a..7c) is made of an electrically insulating material.

7. Electrical switchgear (1) according to any one of claims 1 to 6, **characterized in that** the protection of the joint enclosure (7a..7c) is better than the protection of the switchgear housing (3).

8. Electrical switchgear (1) according to any one of claims 2 to 7, **characterized in that** the IP code of the joint enclosure (7a..7c) is higher than the IP code of the switchgear housing (3).

9. Electrical switchgear (1) according to any one of claims 1 to 8, **characterized in that** the joint (6a, 6b) is arranged at a border (B) of concatenated switchgear sections (5a, 5b) or concatenated switchgear frames (2).

10. Electrical switchgear (1) according to any one of claims 1 to 9, **characterized in that** the joint (6a, 6b) is embodied as a bolted joint or as a clamped joint.

11. Electrical switchgear (1) according to any one of claims 1 to 10, **characterized in** a busbar holder (11) arranged within the joint enclosure (7a..7c).

12. Electrical switchgear (1) according to any one of claims 1 to 11, **characterized in** a switching device (12), which is arranged within the switchgear housing (3) and which is electrically connected to the busbars (4).
